(19) Europäisches Patentamt

European Patent Office

Office européen des brevets

(11) **EP 0 983 195 B1**

(12) **EUROPÄISCHE PATENTSCHRIFT**

(45) Veröffentlichungstag und Bekanntmachung des Hinweises auf die Patenterteilung:
**01.08.2001   Patentblatt 2001/31**

(21) Anmeldenummer: **99915449.5**

(22) Anmeldetag: **06.05.1999**

(51) Int Cl.$^7$: **B64F 1/06**, F15B 15/16

(86) Internationale Anmeldenummer:
**PCT/CH99/00189**

(87) Internationale Veröffentlichungsnummer:
**WO 99/61318 (02.12.1999 Gazette 1999/48)**

(54) **STARTVORRICHTUNG FÜR FLUGZEUGE**

TAKE-OFF DEVICE FOR AIRPLANES

DISPOSITIF DE DECOLLAGE POUR AERONEF

(84) Benannte Vertragsstaaten:
**AT CH DE ES FR GB IT LI SE**

(30) Priorität: **26.05.1998   CH 114998**

(43) Veröffentlichungstag der Anmeldung:
**08.03.2000   Patentblatt 2000/10**

(73) Patentinhaber: **Prospective Concepts AG
8702 Zollikon (CH)**

(72) Erfinder:
• **REINHARD, Andreas
CH-8008 Zürich (CH)**

• **STEFFEN, Sepp
CH-6147 Altbüron (CH)**
• **AMMANN, Hans-Ulrich
4900 Langenthal (CH)**

(74) Vertreter: **Salgo, Reinhold Caspar, Dr.
Rütistrasse 103
8636 Wald (CH)**

(56) Entgegenhaltungen:
**DE-C- 485 628      US-A- 3 968 947
US-A- 4 333 382      US-A- 4 524 929**

**Beschreibung**

Die vorliegende Erfindung bezieht sich auf eine Startvorrichtung für Flug- und Fahrzeuge nach dem Oberbegriff des Patentanspruches 1.

Startvorrichtung für Flugzeuge sind allgemein bekannt, seien dies Katapulte für Kampfflugzeuge auf Flugzeugträgern, seien dies Startvorrichtungen für Segelflugzeuge in Form von motorbetriebenen Aufrolleinrichtungen für ein Startseil oder Gummiseile.

Allen diesen bekannten Vorrichtungen ist gemeinsam, dass sie ortsfeste Anlageteile aufweisen, die meist die ganze Vorrichtung umfassen und dass flugzeugseitig jeweils nur ein Aufnahmehaken für die Startvorrichtung vorhanden ist, die Vorrichtung also nur ortsgebunden eingesetzt werden kann. Zudem sind alle diese bekannten Anlagen schwer und, im Falle der auf Flugzeugträgern vorhandenen, nicht transportabel.

Aus US 4,524,929 ist eine mit dem Fahrwerk eines Flugzeugs gekoppelte Starthilfe bekannt: Sowohl beim Bugrad als auch bei beiden Rädern des Hautfahrwerks befindet sich je in einem teleskopisch ausdehnbaren Element ein unter hohem Druck stehendes Gas. In einer frühen Phase des Starts wird zunächst das ausdehnbare Element des Bugrades ausgelöst, wodurch die Nase des Flugzeuges angehoben wird. In einer späteren Phase werden dann auch die beiden ausdehnbaren Elemente des Hauptfahrwerks ausgelöst, wodurch das Flugzeug zusätzlich eine vertikale Geschwindigkeitskomponente bekommt und so gewissermassen nach oben in die Luft geworfen wird. Diese Starthilfe allein ist dabei aber keineswegs in der Lage, das Flugzeug auf die für einen kontrollierten Flugzustand nötige Horizontalgeschwindigkeit zu bringen.

Aus DE 485 628 ist weiter eine Startvorrichtung bekannt, welche eine Reihe von teleskopartig ineinander greifenden luftdichten Kolben aufweist. Diese können mit Pressluft beschickt und auf diese Weise zur Beschleunigung eines Wagens verwendet werden, auf welchem das Flugzeug steht. Diese Kolben sind horizontal angeordnet und damit nicht dazu geeignet, das Flugzeug auf eine passend ansteigende Flugbahn zu beschleunigen. Wegen der vergleichweise grossen Abmessungen und Massen dieser Kolben können solche Startvorrichtungen ausserdem auch nur ortsfest gebaut, aber nicht in ein Flugzeug eingebaut werden.

Die Aufgabe, die mit der vorliegenden Erfindung gelöst werden soll, besteht in der Schaffung einer Startvorrichtung, die mit dem Flug- oder Fahrzeug verbunden werden kann und so praktisch ohne ortsfeste Anlegeteile auskommt., Die zu schaffende Startvorrichtung soll zudem auch für Leichtflugzeuge einsetzbar sein, jedoch auch ohne grosse Modifikationen ortsfest, also ausserhalb von Flug- oder Fahrzeugen eingesetzt werden können.

Die Lösung der gestellten Aufgabe ist hinsichtlich ihrer Hauptmerkmale wiedergegeben im Patentanspruch 1, in den davon abhängigen Patentansprüchen hinsichtlich weiterer vorteilhafter Ausbildungsmerkmale.

Anhand der beigefügten Zeichnungen ist die Erfindung näher erläutert.

Es zeigen

Fig. 1    eine schematische Draufsicht auf die erfindungsgemässe Vorrichtung,

Fig. 2    einen Längsschnitt durch ein Ausführungsbeispiel,

Fig. 3    eine mehr ins Einzelne gehende Draufsicht,

Fig. 4    einen Längsschnitt durch ein Detail,

Fig. 5    einen Längsschnitt durch einen Teil der Vorrichtung in eingefahrenem Zustand.

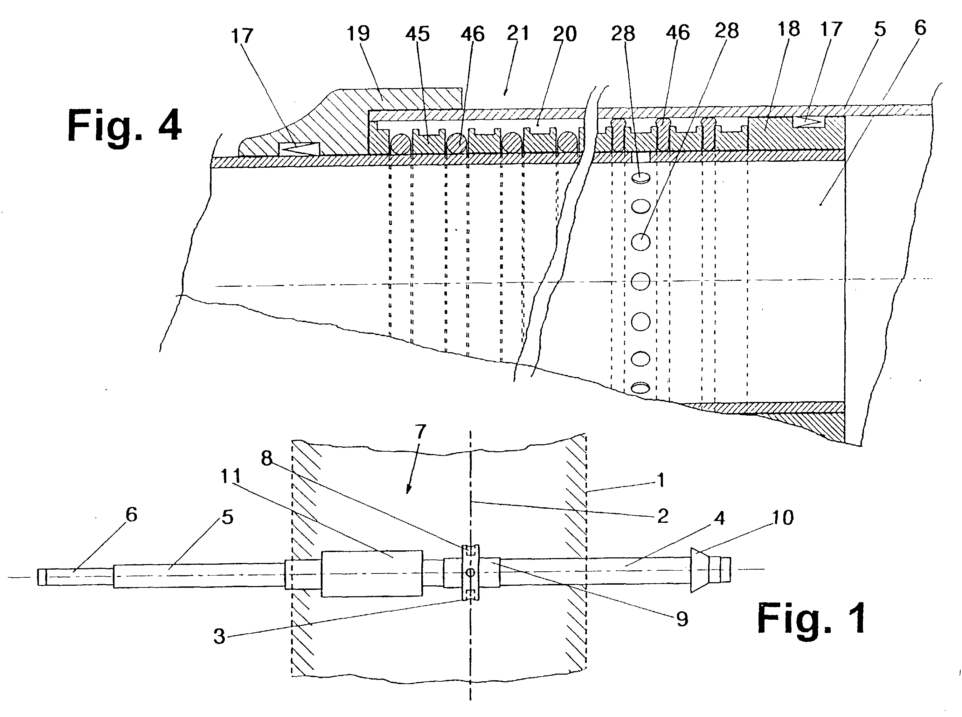

Fig. 1 zeigt in schematischer Darstellung den Grundaufbau der erfindungsgemässen Startvorrichtung. Mit 1 ist der Flügel eines Flugzeuges bezeichnet, mit 2 dessen Auftriebsschwerlinie. Im wesentlichen im Schnitt von Flugzeug-Längsachse und Auftriebsschwerlinie 2 ist ein Rahmen 3 einer kardanischen Aufhängung so angeordnet, dass der Rahmen 3 um eine horizontale Achse 8 schwenkbar ist.

Durch den Rahmen 3 und durch ihn geführt verläuft ein äusserstes Rohr 4 einer beispielsweise dreiteiligen teleskopischen Anordnung 7 von drei Rohren 4, 5, 6. Der Rahmen 3 der kardanischen Aufhängung greift mit einer vertikalen Achse 37 an einer das äusserste Rohr 4 umschliessenden Muffe 9 an.

Im eingefahrenen Zustande der teleskopischen Anordnung 7 befindet sich ihr Schwerpunkt im wesentlichen im Zentrum des Rahmens 3, so dass dann keine Drehmomente aufzunehmen sind. Die Startvorrichtung wird aus dieser eingefahrenen Stellung mit Druckgas beaufschlagt; das hintere Ende des Rohres 6 drückt gegen einen am Boden vorhandenen Abstosspunkt; die teleskopische Anordnung 7 dehnt sich auf etwa beispielsweise ihre dreifache Länge aus und erteilt dem Flugzeug die erforderliche Startgeschwindigkeit. Wenn die teleskopische Anordnung 7 ganz ausgefahren ist, wird sie - ebenfalls durch Druckgas - wieder eingezogen. Das in der Anordnung 7 vorhandene, nach dem Abstossen nicht mehr notwendige Druckgas wird durch ein Hauptentlastungsventil abgelassen und durch einen Trichter 10 nach hinten umgelenkt. Am äussersten Rohr 4 sitzt beispielsweise eine Druckkammer 11, die nach dem Ausstossen der Rohre 5, 6 mit Druckgas gefüllt wird, das anschliessend zum Wiedereinziehen der genannten Rohre verwendet wird. Nach Beendigung des Startvorganges wird die Startvorrichtung in der drehmomentfreien Stellung im Flugzeug fixiert.

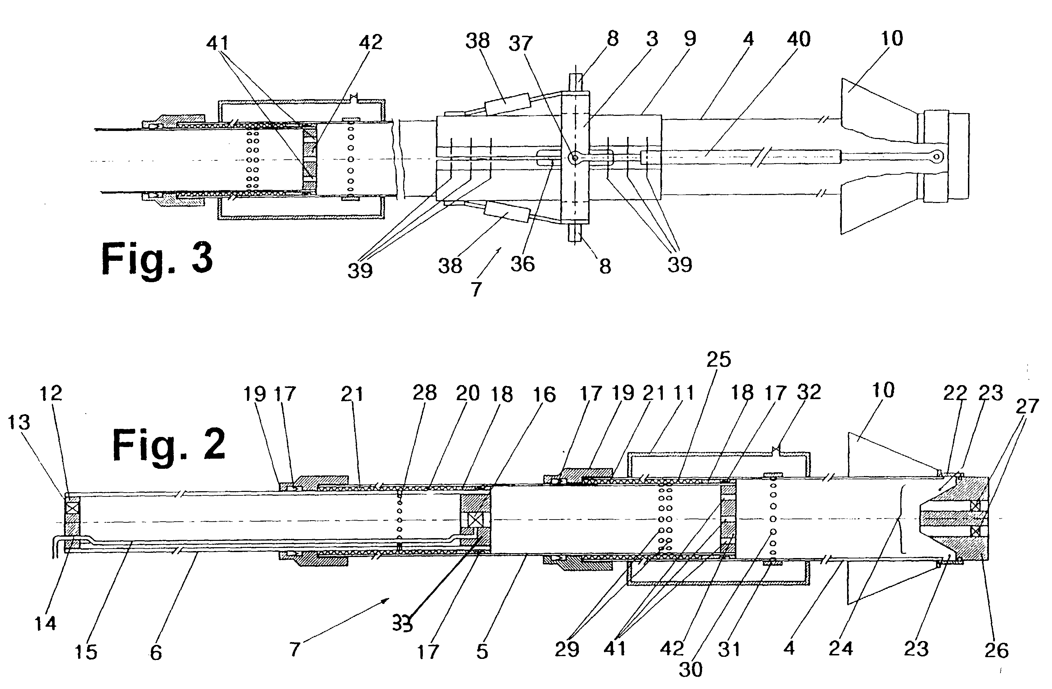

In den folgenden Figuren werden der Aufbau und die Funktionsweise der teleskopischen Anordnung anhand eines Ausführungsbeispiele näher beschrieben. Fig. 2 zeigt den Längsschnitt eines Ausführungsbeispiels; der Rahmen 3 mit Muffe 9 und weitere noch zu schildernde Details sind weggelassen; die teleskopische Anordnung 7 ist in völlig ausgefahrener Stellung dargestellt.

An seinem hinteren Ende weist das innerste Rohr 6 einen Boden 12 auf, der ein Füllventil 13 und eine Durchführung 14 für eine Steuer-Druckgasleitung 15 enthält. Letztere durchsetzt das Rohr 6 der Länge nach und mündet an seinem vorderen Ende in einem Ventil 16. Das Rohr 6 ist als Druckspeicher für das Arbeitsdruckgas konzipiert. Bei geschlossenem Ventil 16 wird es durch das Füllventil 13 von einer Druckflasche oder einem Kompressor - allgemein also von einer externen Hochdruckquelle - auf den notwendigen Arbeitsdruck gefüllt.

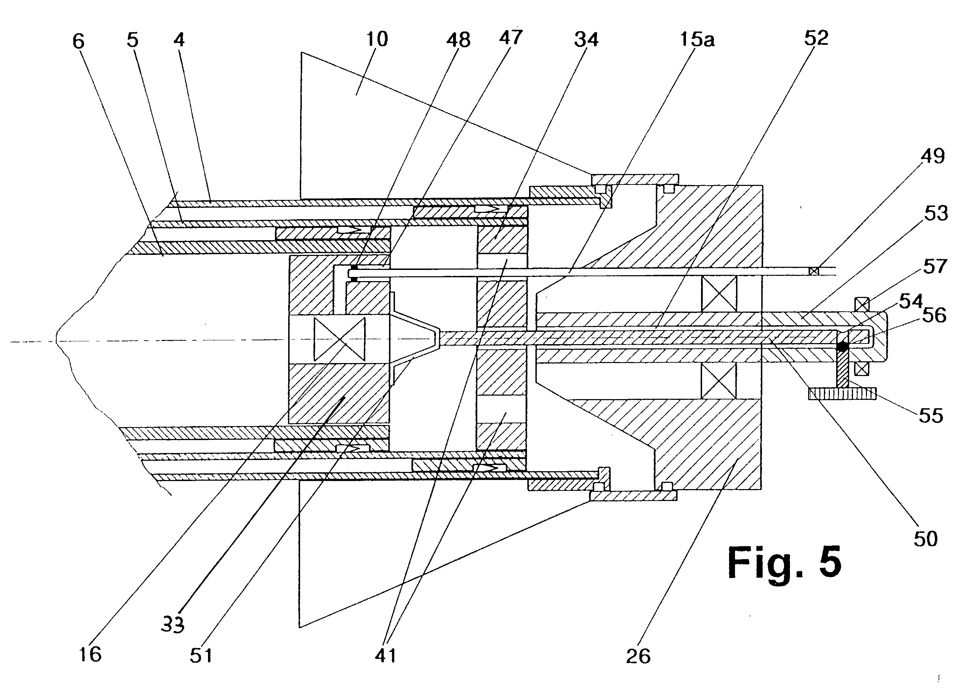

Am vorderen Ende ist das Rohr 6 von einem mit einer Dichtung 17 versehenen inneren Führungsring 18 umgeben, der am Rohr 6 mittels eines Gewindes befestigt ist. Am hinteren Ende des mittleren Rohres 5 ist in gleicher Weise ein äusserer Führungsring 19 befestigt, der ebenfalls eine Dichtung 17 aufweist. Zwischen den Rohren 5, 6 entsteht ein Ringspalt 20, der durch die beiden Führungsringe 18, 19 mit Dichtungen 17 abgedichtet ist. Im hinteren Teil des Ringspaltes 20 befindet sich eine Dämpfungseinrichtung 21, die hier summarisch als Feder eingetragen ist, auf welche jedoch in Fig. 4 näher Bezug genommen wird.

Zwischen dem äusseren Rohr 4 und dem mittleren Rohr 5 ist die gegenseitige Abdichtung in gleicher Weise gelöst, so dass auch hier ein innerer Führungsring 18, ein äusserer Führungsring 19 mit Dichtungen 17 vorhanden sind, wodurch ein Ringspalt 25 entsteht, in welchem ebenfalls eine Dämpfungseinrichtung 21 angeordnet ist. Am vorderen Ende des äusseren Rohres 4 sitzt, längs verschiebbar, der Trichter 10, der mit einem Ring 22 alle radial mündenden Oeffnungen 23 eines Hauptentlastungsventils 24 verschliesst. Dieses ist in einem Kopfstück 26 des Rohres 4 eingearbeitet; dieses trägt ferner eine Anzahl - eingezeichnet sind deren zwei - Ueberdruckventile 27.

Gegen das vordere Ende hin, beispielsweise etwa auf 1/5 seiner Länge, bedingt durch die Länge der Dämpfungseinrichtung 21, trägt das mittlere Rohr 5 eine Reihe Löcher 28, die in ausgefahrener Stellung der teleskopischen Anordnung 7 in die Region der Dämpfungseinrichtung 21 zu liegen kommen und einerseits dazu dienen, beim Ausführen den Ringspalt 20 zu entlüften, anderseits - wie später detailliert beschrieben - zum Wiedereinfahren der teleskopischen Anordnung 7.

Das äussere Rohr 4 trägt, an analoger Stelle wie Rohr 5, eine doppelte Reihe von Löchern 29 und in einigem Abstand kopfseitig davon beispielsweise - in etwa 1/20 der Rohrlänge - eine weitere Reihe von Löchern 30, die als Rückschlagventile ausgestaltet und beispielsweise durch ein Elastomerband 31 abgedeckt sind. Die Löcher 29, 30 münden in die Druckkammer 11, die mit einem Abblasventil 32 ausgerüstet ist.

Fig. 3 zeigt im Einzelnen die kardanische Aufhängung und deren Zusammenwirken mit anderen Teilen der erfindungsgemässen Vorrichtung. Während der linke Teil der Zeichnung eine mehr zur Orientierung gedachte Wiederholung eines Teils von Fig. 2 darstellt, ist der rechte Teil von Fig. 3 eine Draufsicht auf den mittleren bis vorderen Teil des äusseren Rohres 4. Der Rahmen 3 der kardanischen Aufhängung der teleskopischen Anordnung 7 ist um die flugzeugseitig gelagerte horizontale Achse 8 schwenkbar. Die dazu senkrecht stehende Achse 37, senkrecht zur Zeichenebene stehend, weist eine Lagerung auf, die in je einer Nut 36 verschieblich ist: Die eine Nut 36 ist sichtbar, die andere befindet sich unterhalb des Rohres 4 auf der unteren Seite der Muffe 9. Die teleskopische Anordnung 7 besitzt eine beschränkte Schwenkbarkeit um die Achse 37. Beschränkt wird sie durch zwei mit Federelementen versehene harte Stossdämpfer 38, die einerseits an der horizontalen Achse 8, anderseits an der Muffe 9 angreifen. Diese ist mit durch deren Achsen angedeutete Schrauben 39 auf dem Rohr 4 festgeklemmt.

An der senkrechten Achse 37 greifen zwei Stossdämpfer 40 an (der eine ist unsichtbar unterhalb des Rohres 4) die an geeigneter Stelle des Trichters 10 ihren zweiten Kraftangriff haben. Die Stossdämpfer 40 sind hart in Bezug auf Verkürzung und sehr nachgiebig in Bezug auf Verlängerung, dies mit ausgesprochener Hysteresecharakteristik.

Der Arbeitsablauf dieser ersten bisher dargestellten Variante des ersten Ausführungsbeispiels geht wie folgt: In der Ruhe- oder Startposition der teleskopischen Anordnung 7 sind die Rohre 5, 6 ganz ins äussere Rohr 4 eingefahren. Die Steuer-Druckgasleitung 15, die ausserhalb der Startvorrichtung nach vorne zum Piloten des Flugzeuges geht (nicht dargestellt), ist zunächst drucklos. Sobald sie mit dem Steuerdruck beaufschlagt wird, öffnet das Ventil 16 im mit 33 bezeichneten Kopfstück des inneren Rohrs 6 und lässt das im inneren des Rohres 6 gespeicherte Druckgas ausströmen. Der im mittleren Rohr 5 ansteigende Druck bewirkt auf die Querschnittsfläche des Rohres 6 eine Kraft, die diese relativ zum mittleren Rohr 5 nach hinten stösst. Gleichzeitig strömt das Druckgas durch immer offene Drosselventile 41 im mit 34 bezeichneten Kopfstück des mittleren Rohres 5 ins Innere des äusseren Rohres 4. Dadurch entsteht auch auf die Querschnitte der Rohre 5, 6 eine Kraft, die das Rohr 5 relativ zum es umgebenden Rohr 4 nach hinten bewegt. Da das innere Rohr 6 jedoch gegen einen Ankerpunkt der Umgebung drückt, bewegen sich die Rohre 4, 5 nach vorne, und das Flugzeug, auf welches die so wirkende Kraft über die horizontale Achse 8 des Rahmens 3 übertragen wird, wird beschleunigt. Durch Anpassung des Querschnittes der Drosselventile 41 kann bewirkt werden, dass die Rohre 5, 6 etwa gleichzeitig völlig ausgefahren sind. Gegen das Ende der Verschiebungswege der Rohre 5, 6 treffen die Führungsringe 18 auf die Dämpfungseinrichtungen. Details hiezu sind in Fig. 4 dargestellt. Während des ganzen Ausfahrvorganges entlüften die Ringspalte 20, 25 über die Löcher 28, 29, der Ringspalt 20 direkt nach aussen, der Ringspalt 25 in die Druckkammer 11. Kurz vor Erreichen der Endstellung des mittleren Rohres 5 wird die Reihe der Löcher 30 durch die Dichtung 17 des Führungsringes 18 freigegeben; kurz bevor das Hauptentlastungsventil 24 in Funktion tritt, wird ein Teil des im Rohr 4 befindlichen Druckgases auf noch vollem Druck über die Löcher 30 in die Druckkammer 11 abgeblasen.

Beim Erreichen der vollen Ausfahrstellung wird der Bewegungsimpuls der Rohre 5, 6 über die Dämpfungseinrichtungen 21 an das äussere Rohr 4 übertragen. Diese führt daher relativ zum Flugzeug eine Bewegung nach hinten aus, die durch die Nuten 36 ermöglicht und die Stossdämpfer 38 begrenzt und gedämpft wird. Diese Relativbewegung des Rohres 4 nach hinten bewirkt, dass sich der den Trichter 10 tragende Ring 22 relativ zum Rohr 4 nach vorne schiebt und damit die Oeffnungen 23 des Hauptentlastungsventils 24 freigibt und, wegen der Hysteresecharakteristik der Stossdämpfer 40, auch frei lässt. Die drei Rohre sind dann drucklos. Das durch den Trichter 10 nach hinten umgelenkte abgelassene Druckgas erzeugt zusätzlichen, den Startvorgang unterstützenden, Schub.

Die in der Druckkammer 11 befindliche Luft kann nun nur durch die Löcher 29 zurückströmen, da die Löcher 30 durch das Elastomerband 31 verschlossen sind. Sie strömt in den Ringspalt 25 und übt auf dessen Querschnitt eine Kraft aus, die das Rohr 5 ins Innere des Rohres 4 zurückstösst. Sobald die Reihe der Löcher 28 am mittleren Rohr 5 innerhalb der Dichtung 17 am äusseren Führungsring 19 des Rohres 4 zu liegen kommt, strömt die Luft aus der Druckkammer 11 auch in den Ringspalt 20 zwischen den Rohren 5, 6, wodurch auch das Rohr 6 vollends eingefahren wird. Darauf hin kann das Abblasventil 32 an der Druckkammer 11 beispielsweise elektrisch betätigt und das ganze System drucklos gemacht werden.

In Fig. 4 ist ein Ausführungsbeispiel einer Dämpfungseinrichtung 21 dargestellt. Die Aufgabe, die hier besonders zu lösen ist, liegt primär in der zeitlichen Verlängerung des Kraftstosses, also in der Verkleinerung der Impulsänderung pro Zeiteinheit, da

$$F = \frac{dp}{dt}$$

wo

F = Kraft
$\frac{dp}{dt}$ = zeitliche Aenderung des Impulses

Sekundär kann die Aufgabe gelöst werden, einen Teil der kinetischen Energie der teleskopischen Anordnung über Reibungsarbeit aus dem System zu entfernen. Das Ausführungsbeispiel gemäss Fig. 4 weist dazu folgenden Aufbau auf: Auf dem inneren Rohr 6, anschliessend an den inneren Führungsring 18, sitzt eine Vielzahl - beispielsweise 40 Stück - von Kunststoffringen und O-Ringen 46, jeweils alternierend angeordnet, wie links von der Bruchlinie in Fig. 4 dargestellt. Abgeschlossen ist diese Anordnung beispielsweise durch je einen Kunststoffring 45, um für alle O-Ringe 46 die gleichen Bedingungen zu schaffen. Zwischen den Kunststoffringen 45 und O-Ringen 46 und der inneren Wandung des mittleren Rohres 5 besteht ein Abstand, um der Luft im Ringspalt 20 den Zutritt zu den Löchern 28 zu ermöglichen.

Ist das innere Rohr 6 soweit ausgefahren, dass der hinterste Kunststoffring 45 am äusseren Führungsring 19 des mittleren Rohres 5 anschlägt, werden die O-Ringe 46 zusammengedrückt, wie in Fig. 4 rechts der Bruchlinie dargestellt. Der gesamte Federweg aller O-Ringe 46 ergibt den Bremsweg des inneren Rohres 6. Sobald die O-Ringe 46 soweit zusammengedrückt sind, dass sie die innere Wandung des mittleren Rohres 5 berühren, ergeben sich Reibungskräfte und damit Reibungsarbeit zwischen den O-Ringen 46 und der genannten Wandung. Die Elastizität der O-Ringe 46 einerseits und das durch die Löcher 28 einströmende Druckgas anderseits lösen die O-Ringe 46 wieder aus der dargestellten Stellung und ermöglichen damit das Wiedereinfahren des Rohres 6.

Obwohl an den Rohren 5, 6 gezeigt, gilt die Darstellung in gleicher Weise auch für die Dämpfungseinrichtung 21 zwischen den Rohren 4, 5. Das Kopfstück des Rohres 6 wurde, da nichts zu der eben beschriebenen Funktion beitragend, weggelassen.

Die Dämpfungseinrichtung 21 kann im Einzelnen selbstverständlich anders gelöst sein, so lange sie die gestellten Aufgaben erfüllt, nämlich die Impulsänderung auf einen begrenzten und definierten Weg zu verteilen und mindestens einen Teil der kinetischen Energie über Reibungsarbeit abzubauen.

Eine Variante zum Ausführungsbeispiel gemäss Fig. 2, 3, 4 ist Gegenstand von Fig. 5. Hier ist die teleskopische Anordnung 7 in völlig eingefahrener Stellung dargestellt. Anstatt die Steuer-Druckgasleitung 15 durch den im inneren Rohr 6 befindlichen Hochdruckspeicher hindurchzuführen, wird das im Kopfstück 33 des inneren Rohres 6 angeordnete Ventil 16 von der Kopfseite der Anordnung her angesteuert. Hiezu durchsetzt die hier mit 15a bezeichnete Steuer-Druckgasleitung das Kopfstück 26 des äusseren Rohres 4 und ist auch dort verankert. Vom Kopfstück 26 verläuft sie durch eines der immer offenen Drosselventile 41 und erreicht dann eine nach vorne offene Bohrung 47 im Kopfstück 33 des Rohres 6, die zum Ventil 16 führt. In der Bohrung 47 ist die Steuer-Druckgasleitung 15a mit einem O-Ring 48 abgedichtet.

Ein schematisch dargestelltes Steuerventil 49 öffnet dem Steuer-Druckgas den Weg zum Ventil 16, womit dieses geöffnet werden kann. Das Wieder-Schliessen des Ventils 16 nach Abschluss des Startvorganges kann entweder pneumatisch oder mechanisch - über nicht dargestellte Mittel - erfolgen.

Eine weitere Einzelheit, die sowohl für die Fig. 2 bis 4 als auch für die dargestellte Variante anwendbar ist, besteht in einem Sicherungsstab 50, der, beispielsweise mittels eines Dreibeins 51 am Kopfstück 33 des Rohres 6 befestigt ist. Der Sicherungsstab 50 durchsetzt beispielsweise das zentrale der Drosselventile 41 im Kopfstück 34, wird mit Spiel durch eine Bohrung 52 im Kopfstück 26 hindurchgeführt und endet in einem luftdicht an diesem befestigten Aufsatz 53. Am vorderen Ende weist der Sicherungsstab 50 eine Nut 54 mit etwa halbrundem Querschnitt auf, in welche eine Sicherungsschraube 55 eingreifen kann. Diese trägt an ihrer Spitze eine mit einer starken Feder belastete Kugel 56 auf, so dass der Sicherungsstab nur gegen die Kraft der federbelasteten Kugel zurückgezogen werden kann. Diese Kraft kann so eingestellt werden, dass die teleskopische Anordnung 7 gegen alle normalen Erschütterungen in der eingefahrenen Stellung gesichert bleibt, dass diese Kraft auch ausreicht, um die vom Steuer-Luftdruck auf den Querschnitt der Bohrung 47 erzeugten Kräfte zu kompensieren, dass jedoch die Kraft des vollen Arbeitsdruckes den Sicherungsstab 50 aus dieser Schnapp-Verriegelung herausziehen kann. Selbstverständlich kann diese bedingte Arretierung auch anders gelöst werden, solange sie die erwähnten Aufgaben erfüllt.

Die in Fig. 5 gezeigte Anordnung der Steuer-Druckgasleitung 15a (bzw. 15) hat gegenüber derjenigen von Fig. 2 den Vorteil des kurzen Weges. Das Steuerventil 49 muss hier als Rückschlagventil gegen den Arbeitsdruck ausgestaltet sein.

Am Aufsatz 53 befindet sich ein elektromagnetischer Sensor 57, der über bekannte elektronische Mittel feststellen kann, ob der Sicherungsstab 50 eingefahren ist und/oder sich bewegt: ein Positions- und Bewegungsmelder.

Obwohl vom der bisherigen Beschreibung zugrunde liegenden Konzept anders lautend, lässt sich die erfindungsgemässe Vorrichtung auch ortsfest einsetzen. Die Startvorrichtung, geführt im Rahmen 3 ist am Boden verankert, die Rohre 5, 6 oder allenfalls weitere, werden durch die Wirkung des Druckgases ausgefahren. Das zu beschleunigende Objekt - auch Fahrzeuge oder unbemannte Flugzeuge, sog. Drohnen sind hier immer mitgedacht - befindet sich im wesentlichen mit seinem Schwerpunkt am nun vorderen Ende des inneren Rohres 6. Der Startvorgang verläuft damit ähnlich, wie von einem Flugzeugträger. Der besondere Vorteil liegt hier in der leichten Transportfähigkeit der erfindungsgemässen Vorrichtung bei der alle beschriebenen Funktionen - abgesehen von der Bewegungsrichtung - im wesentlichen unverändert bleiben.

**Patentansprüche**

**1.** Start- und Beschleunigungsvorrichtung für Flug- und Fahrzeuge sowohl für den bodenfesten als auch den bordfesten Einbau, mit einer teleskopischen Anordnung (7) mindestens dreier Rohre (4, 5, 6), nämlich einem äusseren Rohr (4), einem inneren Rohr (6) und einem oder mehreren mittleren Rohren (5), die alle nach aussen luftdicht gegeneinander verschieblich sind, mit mindestens einem Druckspeicher (6) für Druckgas mit einem Ventil (16) zum raschen Ausströmenlassen des Druckgases aus dem Druckspeicher (6) in die teleskopische Anordnung (7), mit Mitteln, um das Ventil (16) zu öffnen und mit Mitteln, um die Rohre (4, 5, 6) am Ende ihrer Verschiebungswege gegeneinander zu dämpfen, wobei Mittel vorhanden sind, um die teleskopisch ausgefahrenen Rohre (5, 6) wieder in den eingefahrenen Zustand zurückzuführen und Mittel vorhanden sind, um nach dem Ausfahren der teleskopischen Anordnung (7) den grössten Teil des dafür benötigten Druckgases schnell abzublasen, dadurch gekennzeichnet, dass

- das äussere Rohr (4) in einem Rahmen (3) gelagert ist,
- das innere Rohr (6) als Druckspeicher ausgebildet ist und dazu einen Boden (12) mit einem Füllventil (13) aufweist ,
- eine Steuer-Druckgasleitung (15, 15a) vorhanden und von aussen gespeist ist,
- das innere Rohr (6) an seinem anderen, dem Boden (12) abgewandten Ende ein Kopfstück (33) aufweist, welches das Ventil (16) enthält und in welches die Steuer-Druckgasleitung (15, 15a) zur Steuerung des Ventils (16) mündet,
- das mittlere Rohr (5) und das äussere Rohr (4) je ein Kopfstück (34, 26) aufweisen.

**2.** Start- und Beschleunigungsvorrichtung für Flug- und Fahrzeuge nach Patentanspruch 1, dadurch gekennzeichnet, dass der Boden (12) des inneren Rohres (6) eine Durchführung für die Steuer-Druckgasleitung (15) enthält und die Steuer-Druckgasleitung (15) das als Druckspeicher ausgebildete Rohr (6) der Länge nach durchsetzt, so dass das Oeffnen des Ventils (16) im Kopfstück (33) des inneren Rohres (6) vom Boden (12) des inneren Rohres (6) aus gesteuert werden kann.

**3.** Start- und Beschleunigungsvorrichtung für Flug- und Fahrzeuge nach Patentanspruch 1, dadurch gekennzeichnet, dass die Steuer-Druckgasleitung (15a) ausgehend vom Kopfstück (26) des äusseren Rohres (4) jenes des mittleren Rohres (5) durchsetzt und, mittels Dichtmitteln abgedichtet, in eine Bohrung (47) im Kopfstück (33) des Inneren Rohres (6) mündet, so dass das Oeffnen des Ventils (16) im Kopfstück (33) des inneren Rohres (6) vom Kopfstück (26) des äusseren Rohres (4) aus gesteuert werden kann.

**4.** Start- und Beschleunigungsvorrichtung für Flug- und Fahrzeuge nach einem der Patentansprüche 1 bis 3, dadurch gekennzeichnet,

-   das Kopfstück (34) des mittleren Rohres (5) eine Anzahl als Drosselventile (41) wirkende Bohrungen aufweist,
-   das Kopfstück (26) des äusseren Rohres (4) eine Anzahl Ueberdruckventile (27) aufweist und ferner eine Anzahl radial mündender Oeffnungen (23) aufweist, die als Hauptentlastungsventile für die teleskopische Anordnung (7) wirken.

**5.** Start- und Beschleunigungsvorrichtung für Flug- und Fahrzeuge nach Patentanspruch 1, dadurch gekennzeichnet, dass das Ventil (16) im Kopfstück (33) des inneren Rohres (6) ein elektrisch zu betätigendes Ventil ist.

**6.** Start- und Beschleunigungsvorrichtung für Flug- und Fahrzeuge nach Patentanspruch 1, dadurch gekennzeichnet, dass

-   die Rohre (4, 5) so dimensioniert sind, dass zwischen dem Innendurchmesser des äusseren Rohres (4) und dem Aussendurchmesser des mittleren Rohres (5) ein erster Ringspalt (25) entsteht,
-   zwischen dem Innendurchmesser des mittleren Rohres (5) und dem Aussendurchmesser des inneren Rohres (6) ein zweiter Ringspalt (20) entsteht,
-   das mittlere Rohr (5) im Bereiche seines Kopfstückes (34) einen inneren Führungsring (18) mit Dichtung (17) aufweist, welcher im äusseren Rohr (6) gleiten kann,
-   das innere Rohr (6) im Bereiche seines Kopfstückes (33) einen inneren Führungsring (18) mit Dichtung (17) aufweist, welcher im mittleren Rohr (5) gleiten kann,
-   das äussere Rohr (4) an seinem von seinem Kopfstück (26) abgewandten Ende einen äusseren Führungsring (19) mit Dichtung (17) aufweist, in welchem das mittlere Rohr (5) gleiten kann,
-   das mittlere Rohr (5) an seinem von seinem Kopfstück (34) abgewandten Ende einen äusseren Führungsring (19) mit Dichtung (17) aufweist, in welchem das i'nnere Rohr (6) gleiten kann.

**7.** Start- und Beschleunigungsvorrichtung für Flug- und Fahrzeuge nach Patentanspruch 6, dadurch gekennzeichnet, dass

-   die Mittel, um die Rohre (4, 5, 6) am Ende ihrer Verschiebungswege gegeneinander zu dämpfen, in den Ringspalten (20, 25) vorhanden und angeordnet sind,
-   diese Mittel aus einem Dämpfungselement (21) bestehen, gebildet aus einer Vielzahl von abwechslungsweise angeordneten Kunststoffringen (45) und O-Ringen (46), wobei die Aussendurchmesser der Kunststoffringe (45) kleiner sind als derjenige des jeweiligen Ringspaltes (20, 25),
-   das aus einer Vielzahl von abwechslungsweise hintereinander geschalteten Kunststoffringen (45) und 0-Ringen (46) gebildete Dämpfungselement (21) am Ende der gegenseitigen Verschiebungswege der Rohre (4, 5, 6) jeweils zwischen den inneren und äusseren Führungsringen (18, 19) gepresst und die 0-Ringe (46) damit komprimiert werden.

**8.** Start- und Beschleunigungsvorrichtung für Flug- und Fahrzeuge nach Patentanspruch 7, dadurch gekennzeichnet, dass die O-Ringe (46) so dimensioniert sind, dass sie als Folge ihrer Kompression an der jeweiligen Innenwand der Rohre (4, 5) Reibungskräfte ausüben.

**9.** Start- und Beschleunigungsvorrichtung für Flug- und Fahrzeuge nach Patentanspruch 1, dadurch gekennzeichnet, dass

-   im Bereich des Schwerpunktes der eingefahrenen teleskopischen Anordnung (7) eine Muffe (9) am äusseren Rohr (4) festgeklemmt ist,
-   der Rahmen (3) eine im wesentlichen horizontale Achse (8) aufweist, um welche er schwenkbar ist,
-   vom Rahmen (3) zwei fluchtende im wesentlichen vertikale Achsen (37) ausgehen und je in einer Nut (36) an der Muffe (9) quer zur Achse (37) und in Richtung des Rohres (4) verschieblich gelagert sind,
-   der Rahmen (3) durch mindestens zwei erste mit Federelementen versehene an der horizontalen Achse (8) ansetzende harte Stossdämpfer (38) mit der Muffe (9) verbunden ist,
-   ein Trichter (10) vorhanden ist, welcher in seiner Längsrichtung verschieblich auf dem Kopfstück (26) des äusseren Rohres (4) sitzt und sich in Ausstossrichtung der teleskopischen Anordnung (7) öffnet,
-   mindestens zwei zweite Stossdämpfer (40) mit stark hysteretischer Charakteristik von je einer der vertikalen Achsen (37) zum Trichter (10) verlaufen, welche Stossdämpfer hart sind in Bezug auf Verkürzung und sehr weich in Bezug auf Verlängerung, so dass der nach dem Ausfahren der teleskopischen Anordnung (7) erfolgende Kraftstoss die Muffe (9) gegen die Wirkung der ersten Stossdämpfer (38) in Bezug auf den Rahmen (3) verschiebt, welche Verschiebung durch die zweiten Stossdämpfer (40) an den auf einem Ring (22) sitzenden Trichter (10) weitergegeben wird und ihn verschiebt, so dass der Ring (22) die im Kopfstück (26) des äusseren Rohres vorhandenen Oeffnungen (23) freigeben kann und das in der teleskopischen Anordnung (7) vorhandene und nun nicht mehr gebrauchte Druckgas durch den Trichter (10) entweichen kann.

10. Start- und Beschleunigungsvorrichtung für Flug- und Fahrzeuge nach Patentanspruch 7, dadurch gekennzeichnet, dass

- die Mittel, um die teleskopisch ausgefahrenen Rohre (5, 6) wieder in den eingefahrenen Zustand zurückzuführen, aus folgendem bestehen
- alle Rohre (4, 5) ausser dem innersten längs des Umfanges je mindestens eine Reihe Löcher (28, 29) aufweisen, die so angeordnet sind, dass sie im ausgefahrenen Zustand der teleskopischen Anordnung (7) zwischen je dem äusseren Führungsring (19) des grösseren und dem inneren Führungsring (18) des kleineren der genannten Rohre (4, 5, 6) liegen,
- das äussere Rohr (4) mindestens eine längs des Umfanges liegende weitere Reihe von Löchern (30) aufweist, welche ausserhalb des genannten Abstandes von Führungsringen (18, 19) und näher beim Kopfstück (26) des äusseren Rohres (4) liegt und von einem Elastomerband (31) abgedeckt ist und dadurch als Rückschlagventile arbeitet,
- eine Druckkammer (11) vorhanden ist, die das äussere Rohr (4) auf einem Teil seiner Länge umgibt und die erste mindestens eine Reihe von Löchern (29) und die zweite Reihe von Löchern (30) überdeckt und ein Abblasventil (32) aufweist,
- beim Ausfahren der teleskopischen Anordnung (7) der innere Führungsring (18) mit Dichtung (17) des mittleren Rohres (5) nach dem Passieren der zweiten Reihe von Löchern (30) diese freigibt, womit ein Teil des Druckgases in die Druckkammer (11) strömen kann, von wo das Druckgas aus der Druckkammer (11) nach dem Abblasen durch die Oeffnungen (23) in den Ringspalt (25) zwischen dem äusseren und dem mittleren Rohr (4, 5) gelangt, durch die auf die Querschnittsfläche des Ringspaltes (25) aufgebaute Kraft das mittlere in das äussere Rohr (4) zurücktreibt und, sobald der innere Führungsring (18) mit Dichtung (17) des inneren Rohres (6) innerhalb des äusseren Führungsringes (19) mit Dichtung (17) des äusseren Rohres (4) zu liegen kommt, auch im Ringspalt (20) zwischen mittlerem und innerem Rohr (6) eine rücktreibende Kraft aufgebaut wird, die das innere Rohr (6) in das mittlere Rohr (5) zurücktreibt.

11. Start- und Beschleunigungsvorrichtung für Flug- und Fahrzeuge nach einem der Patentansprüche 1 bis 10, dadurch gekennzeichnet, dass die Vorrichtung ortsfest ist, der Rahmen (3) mit seiner horizontalen Achse (8) in einem ortsfesten Anlageteil schwenkbar gelagert ist und der Boden (12) des inneren Rohres (6) gegen das zu beschleunigende Objekt stossen kann.

12. Start- und Beschleunigungsvorrichtung für Flug- und Fahrzeuge nach einem der Patentansprüche 1 bis 10, dadurch gekennzeichnet, dass die Vorrichtung in ein bewegliches Objekt eingebaut ist.

13. Start- und Beschleunigungsvorrichtung für Flug- und Fahrzeuge nach Patentanspruch 12, dadurch gekennzeichnet, dass das bewegliche Objekt ein Flugzeug ist, der Rahmen (3) mit seiner horizontalen Achse (8) im wesentlichen im Schwerpunkt des Flugzeuges in einem flugzeugfesten Anlageteil schwenkbar gelagert ist und der Boden (12) des inneren Rohres (6) gegen einen ortsfesten Abstosspunkt wirken kann.

14. Start- und Beschleunigungsvorrichtung für Flug- und Fahrzeuge nach einem der Patentansprüche 1 bis 13, dadurch gekennzeichnet, dass

- das Kopfstück (33) des inneren Rohres (6) einen parallel zu seiner Achse verlaufenden Sicherungsstab (50) trägt, der sowohl das Kopfstück (34) des mittleren als auch das Kopfstück (26) des äusseren Rohres (4) mit Spiel durchsetzt,
- das Kopfstück (26) des äusseren Rohres (4) einen luftdicht und druckfest mit ihm verbundenen Aufsatz (53) trägt, in welchen seitlich eine Sicherungsschraube (55) luftdicht eingeführt ist und an ihrer Spitze eine federbelastete Kugel (56) aufweist,
- der Sicherungsstab (50) so lang ist, dass er bei völlig eingefahrener teleskopischer Anordnung (7) soweit in den Aufsatz (53) hineinragt, dass die Kugel (56) in eine Ringnut(54) am Sicherungsstab (50) einschnappen kann.

15. Start- und Beschleunigungsvorrichtung für Flug- und Fahrzeuge nach Patentanspruch 14, dadurch gekennzeichnet, dass der Aufsatz (53) einen elektromagnetischen Sensor (57) trägt, der sowohl auf die Anwesenheit als auch auf die Bewegung des Sicherungsstabes (50) anspricht.

**Claims**

1. A take-off and accelerating device for aircraft and vehicles both for fixed ground as well as for on board installation, with a telescopic arrangement (7) of at least three tubes (4, 5, 6), namely an outer tube (4), an inner tube (6) and one or more middle tubes (5), which can all slide against each other and are airtight to the outside, with at least one pressure accumulator (6) for compressed gas with a valve (16) for the rapid release of the compressed gas out from the pressure accumulator (6) into the telescopic arrangement (7), with means to open the valve (16) and with means to damp the tubes (4, 5, 6) at the end of their sliding travel against each other, whereby means are available to return the telescopically extended tubes (5, 6) back into the retracted position, so as, following the extension of the telescopic arrangement (7), rapidly to blow off the greater part of the compressed gas required for it, characterised in that

   - the outer tube (4) is mounted in a frame (3),
   - the inner tube (6) is configured as a pressure accumulator, and has a base (12) with a filling valve (13) for this purpose,
   - a control pressure pipe (15, 15a) is present and is supplied from outside,
   - the inner tube (6) has at its other end away from the base (12) a head piece (33), which contains the valve (16) and into which the control gas pipe (15, 15a) for the control of the valve (16) opens,
   - the middle tube (5) and the outer tube (4) each has a head piece (34, 26).

2. A take-off and accelerating device for aircraft and vehicles according to Claim 1, characterised in that the base (12) of the inner tube (6) includes a feed through for the control gas pipe (15) and the control gas pipe (15) passes through the length of the tube (6) which is configured as a pressure accumulator, so that the opening of the valve (16) in the head piece (33) of the inner tube (6) can be controlled from the base (12) of the inner tube (6).

3. A take-off and accelerating device for aircraft and vehicles according to Claim 1, characterised in that the control gas pipe (15a) going out from the head piece (26) of the outer tube (4) passes through that of the middle tube (5) and sealed by sealing means, opens into a boring (47) in the head piece (33) of the inner tube (6) so that the opening of the valve (16) in the head piece (33) can be controlled from the head piece (26) of the outer tube (4) outwards.

4. A take-off and accelerating device for aircraft and vehicles according to one of the Claims 1 to 3, characterised in that,

   - the head piece (34) of the middle tube (5) has a number of borings working as throttle valves (27),
   - the head piece (26) of the outer tube (4) has a number of pressure relief valves (27) and has further a number of radially opening holes (23), which work as main release valves for the telescopic arrangement (7),

5. A take-off and accelerating device for aircraft and vehicles according to Claim 1, characterised in that the valve (16) in the head piece (33) of the inner tube (6) is an electrically operated valve.

6. A take-off and accelerating device for aircraft and vehicles according to Claim 1, characterised in that,

   - the tubes (4, 5) are so dimensioned that between the internal diameter of the outer tube (4) and the outer diameter of the middle tube (5) a first cylindrical clearance (25) arises,
   - between the inner diameter of the middle tube (5) and the outer diameter of the inner tube (6) a second cylindrical clearance (20) arises,
   - the middle tube (5) has an inner guide ring (18) with a seal (17) in the region of its head piece (34), which can slide in the outer tube (6),
   - the inner tube (6) has an inner guide ring (18) with a seal (17) in the region of its head piece (33), which can slide in the middle tube (5),
   - the outer tube (4) has an outer guide ring (19) with a seal (17) at its end away from its head piece (26), in which the middle tube (5) can slide,
   - the middle tube (5) has an outer guide ring (19) with a seal (17) at its end away from its head piece (34), in which the inner tube (6) can slide,

7. A take-off and accelerating device for aircraft and vehicles according to Claim 6, characterised in that,

   - the means for damping the tubes (4, 5, 6) against each other at the end of their sliding paths, are present and arranged in the cylindrical clearances (20, 25),
   - these means comprise a damping element (21), formed from a multiplicity of alternately arranged plastics material rings (45) and O-rings (46), whereby the outer diameters of the plastics material rings (45) are smaller than that of the individual cylindrical clearances (20, 25) concerned,
   - the damping element (21), formed from a multiplicity of alternately arranged plastics material rings (45) and O-rings (46) is pressed at the end of the relative sliding movement paths of the tubes (4, 5, 6) in each case between the inner and outer guide rings (18, 19) and the O-rings (46) are thereby compressed.

8.  A take-off and accelerating device for aircraft and vehicles according to Claim 7, characterised in that the O-rings (46) are dimensioned such that as a consequence of their compression they exert frictional forces on the inner wall in each case of the tubes (4, 5).

9.  A take-off and accelerating device for aircraft and vehicles according to Claim 1, characterised in that the means of damping the tubes (4, 5, 6) against each other at the end of their sliding paths are present and arranged in the cylindrical clearances (20, 25).

    -   in the region of the centre of gravity of the retracted telescopic arrangement (7) a sleeve (9) is clamped firmly to the outer tube (4),
    -   the frame (3) has an essentially horizontal axle (8) about which it can pivot.
    -   two aligned essentially vertical axles (37) stand out from the frame (3) and are each mounted so as to slide in a groove (36) on the sleeve (9) at right angles to the axle (37) and following the direction of the tube (4),
    -   the frame (3) is connected to the sleeve (9) by at least two first hard shock absorbers (38) provided with spring elements positioned on the horizontal axle (8),
    -   a funnel (10) is present, which sits in a sliding manner on the head piece (26) of the outer tube (4) and opens in the extending direction of the telescopic arrangement (7),
    -   at least two further shock absorbers (40) with a strongly hysteresis characteristic run from each of the vertical axles (37) to the funnel (10), which shock absorbers are hard with respect to shortening and very weak in respect of extension, so that the thrust force following the extension of the telescopic arrangement (7) pushes the sleeve (9) against the effect of the first shock absorbers (38) with respect to the frame (3), which thrust is transferred via the second shock absorbers (40) to the funnel (10), sitting on a ring (22), and slides it, so that the ring (22) can release the openings (23) in the head piece (26) of the outer tube and the pressurised gas present in the telescopic arrangement (7) and no longer required can escape through the funnel (10).

10. A take-off and accelerating device for aircraft and vehicles according to Claim 7, characterised in that

    -   the means of retracting the telescopically extended tubes (5, 6) back into the retracted position comprise the following:

    -   all the tubes (4, 5) apart from the innermost have at least one row of holes (28, 29) around the circumference which are so arranged that in the extended condition of the telescopic arrangement (7) they each lie between the outer guide ring (19) of the larger and the inner guide ring (18) of the smaller of the said tubes (4, 5, 6),
    -   the outer tube (4) has at least one further row of holes (30), lying around its circumference which lies outside the stated separation of the guide rings (18, 19) and closer to the head piece (26) of the outer tube (4), and are covered by an elastomer band (31) and thereby operate as a nonreturn valve,
    -   a pressure chamber (11) is present, which surrounds the outer tube (4) for a part of its length and covers the first, at least one row of holes (29) and the second row of holes (30) and has a blow-off valve (32),
    -   in the extension of the telescopic arrangement (7) the inner guide ring (18) with the seal (17) of the middle tube (5), on passing the second row of holes (30) releases them, whereby a part of the pressurised gas can flow into the pressure chamber (11), from where after blowing off through the openings (23) the pressurised gas reaches the cylindrical clearance (25) between the outer and the middle tubes (4, 5) out of the pressure chamber (11), through the force built up on the cross sectional surface of the cylindrical clearance (25) the middle tube (5) is driven back into the outer tube (4) and, as soon as the inner guide ring (18) with the seal (17) of the inner tube (6) comes to lie within the outer guide ring (19) with seal (17) of the outer tube (4), a retracting force is built up also in the cylindrical clearance (20) between the middle tube (5) and the inner tube (6), which drives the inner tube (6) back into the middle tube (5).

11. A take-off and accelerating device for aircraft and vehicles according to one of the Claims 1 to 10, characterised in that the device is stationary, the frame (3) is mounted by its horizontal axle (8), pivoting in a stationary installation part and the floor (12) of the inner tube (6) can thrust against the object to be accelerated.

12. A take-off and accelerating device for aircraft and vehicles according to one of the Claims 1, to 10, characterised in that the device is built into a movable object.

13. A take-off and accelerating device for aircraft and vehicles according to Claim 12, characterised in that the movable object is an aircraft, the frame (3) is mounted by its horizontal axle (8) so that it can pivot in a fixed mounting part of the aircraft essentially at the centre of gravity of the aircraft and the base (12) of the inner tube (6) can operate against a fixed thrust point on the ground.

14. A take-off and accelerating device for aircraft and vehicles according to one of the Claims 1 to 13, characterised in that

- the head piece (33) of the inner tube (6) carries a securing rod (50) running essentially parallel to its axis which penetrates, with play, both the head piece (34) of the middle, and also the head piece (26) of the outer tube (4),
- the head piece (26) of the outer tube (4) carries an airtight extension (53), fastened airtight and pressure-tight to it, and in which a securing screw (55) is introduced at the side in an airtight manner and which has a spring loaded ball (56) at its tip,
- the securing rod (50) is so long that, with the telescopic arrangement (7) fully retracted, it enters the extension (53) far enough so that the ball (56) can snap into a ring groove (54) in the securing rod (50).

15. A take-off and accelerating device for aircraft and vehicles according to Claim 14, characterised in that the extension (53) carries an electromagnetic sensor (57), which responds both to the presence and the movement of the securing rod (50).

**Revendications**

1. Dispositif de décollage et d'accélération pour aéronefs et véhicules, aussi bien pour un montage au sol que pour un montage de bord, comprenant un agencement télescopique (7) d'au moins trois tubes (4, 5, 6), à savoir un tube extérieur (4), un tube intérieur (6) et un ou plusieurs tubes centraux (5) qui sont tous mobiles les uns par rapport aux autres hermétiquement par rapport à l'extérieur, au moins un accumulateur de pression (6) pour du gaz comprimé, avec une soupape (16) destinée à permettre un écoulement rapide du gaz comprimé hors de l'accumulateur de pression (6) vers l'agencement télescopique (7), des moyens pour ouvrir la soupape (16) et des moyens pour amortir les tubes (4, 5, 6) les uns par rapport aux autres à la fin de leur course de déplacement, étant précisé qu'il est prévu des moyens pour ramener en position rentrée les tubes (5, 6) déployés de manière télescopique, et des moyens pour évacuer rapidement, après le déploiement de l'agencement télescopique (7), la majeure partie du gaz comprimé nécessaire pour cela, caractérisé en ce que

- le tube extérieur (4) est monté dans un châssis (3),
- le tube intérieur (6) est conçu comme un accumulateur de pression et présente à cet effet un fond (12) avec une soupape de remplissage (13),
- il est prévu une conduite de gaz comprimé de commande (15, 15a), qui est alimentée de l'extérieur,
- le tube intérieur (6) présente à son autre extrémité, opposée au fond (12), un élément de tête (33) qui contient la soupape (16) et dans lequel débouche ladite conduite (15, 15a) destinée à commander la soupape (16),
- le tube central (5) et le tube extérieur (4) comportent chacun un élément de tête (34, 26).

2. Dispositif de décollage et d'accélération pour aéronefs et véhicules selon la revendication 1, caractérisé en ce que le fond (12) du tube intérieur (6) contient un passage pour la conduite de gaz comprimé de commande (15) et ladite conduite (15) traverse en longueur le tube (6) conçu comme un accumulateur de pression, de sorte que l'ouverture de la soupape (16) prévue dans l'élément de tête (33) du tube intérieur (6) peut être commandée à partir du fond (12) du tube intérieur (6).

3. Dispositif de décollage et d'accélération pour aéronefs et véhicules selon la revendication 1, caractérisé en ce que la conduite de gaz comprimé de commande (15a), à partir de l'élément de tête (26) du tube extérieur (4), traverse celui du tube central (5) et débouche, en étant étanche grâce à des moyens d'étanchéité, dans un trou (47) de l'élément de tête (33) du tube intérieur (6), de sorte que l'ouverture de la soupape (16) prévue dans ledit élément de tête (33) du tube intérieur (6) peut être commandée à partir de l'élément de tête (26) du tube extérieur (4).

4. Dispositif de décollage et d'accélération pour aéronefs et véhicules selon l'une des revendications 1 à 3, caractérisé

- en ce que l'élément de tête (34) du tube central (5) comporte un certain nombre de trous agissant comme des soupapes d'étranglement (41),
- en ce que l'élément de tête (26) du tube extérieur (4) comporte un certain nombre de soupapes de surpression (27) et comporte également un certain nombre d'ouvertures (23) débouchant radialement qui agissent comme des soupapes de décharge principales pour l'agencement télescopique (7).

5. Dispositif de décollage et d'accélération pour aéronefs et véhicules selon la revendication 1, caractérisé en ce que la soupape (16) prévue dans l'élément de tête (33) du tube intérieur (6) est une soupape à commande électrique.

6. Dispositif de décollage et d'accélération pour aéronefs et véhicules selon la revendication 1, caractérisé en ce que

- les tubes (4, 5) sont dimensionnés de telle sorte qu'il se forme un premier espace annulaire (25) entre le diamètre intérieur du tube extérieur (4) et le diamètre extérieur du tube central (5),
- il se forme un second espace annulaire (20) entre le diamètre intérieur du tube central (5) et le diamètre extérieur du tube intérieur (6),
- le tube central (5) comporte dans la zone de son élément de tête (34) un anneau de guidage intérieur (18), pourvu d'un joint d'étanchéité (17), qui peut coulisser dans le tube extérieur (4),
- le tube intérieur (6) comporte dans la zone de son élément de tête (33) un anneau de guidage intérieur (18), pourvu d'un joint d'étanchéité (17), qui peut coulisser dans le tube central (5),
- le tube extérieur (4) comporte à son extrémité opposée à son élément de tête (26) un anneau de guidage extérieur (19), pourvu d'un joint d'étanchéité (17), dans lequel le tube central (5) peut coulisser,
- le tube central (5) comporte à son extrémité opposée à son élément de tête (34) un anneau de guidage extérieur (19), pourvu d'un joint d'étanchéité (17), dans lequel le tube intérieur (6) peut coulisser.

7. Dispositif de décollage et d'accélération pour aéronefs et véhicules selon la revendication 6, caractérisé en ce que

- les moyens pour amortir les tubes (4, 5, 6) les uns par rapport aux autres à la fin de leur course de déplacement sont prévus et disposés dans les espaces annulaires (20, 25),
- ces moyens se composent d'un élément d'amortissement (21) formé d'une multiplicité d'anneaux en matière plastique (45) et d'anneaux toriques (46) disposés en alternance, le diamètre extérieur des anneaux en matière plastique (45) étant inférieur à celui de l'espace annulaire correspondant (20, 25),
- à la fin des courses de déplacement mutuelles des tubes (4, 5, 6), l'élément d'amortissement (21) formé d'une multiplicité d'anneaux en matière plastique (45) et d'anneaux toriques (46) montés en alternance les uns derrière les autres est pressé entre les anneaux de guidage intérieur et extérieur (18, 19), et les anneaux toriques (46) sont ainsi comprimés.

8. Dispositif de décollage et d'accélération pour aéronefs et véhicules selon la revendication 7, caractérisé en ce que les anneaux toriques (46) sont dimensionnés de manière à exercer des forces de frottement à la suite de leur compression contre la paroi intérieure des tubes (4, 5).

9. Dispositif de décollage et d'accélération pour aéronefs et véhicules selon la revendication 1, caractérisé en ce que

- dans la zone du centre de gravité de l'agencement télescopique (7) rentré, un manchon (9) est serré sur le tube extérieur (4),
- le châssis (3) comporte un axe (8) sensiblement horizontal autour duquel il est apte à pivoter,
- deux axes (37) alignés sensiblement verticaux partent du châssis (3) et sont montés sur le manchon (9) dans deux rainures respectives (36) transversales par rapport aux axes (37), de manière à être mobiles dans le sens du tube (4),
- le châssis (3) est relié au manchon (9) par au moins deux premiers amortisseurs de chocs durs (38) qui sont pourvus d'éléments formant ressort et qui sont appliqués sur l'axe horizontal (8),
- il est prévu un entonnoir (10) qui est placé, mobile longitudinalement, sur l'élément de tête (26) du tube extérieur (4) et qui s'ouvre dans le sens de poussée de l'agencement télescopique (7),
- il est prévu au moins deux seconds amortisseurs de chocs (40) à forte caractéristique d'hystérésis qui s'étendent des deux axes verticaux (37) à l'entonnoir (10) et qui sont durs pour le raccourcissement et très souples pour l'allongement, de sorte que l'impulsion qui se produit après le déploiement de l'agencement télescopique (7) déplace le manchon (9) par rapport au châssis (3) à l'encontre de l'action des premiers amortisseurs de chocs (38), ce déplacement étant transmis par les seconds amortisseurs de chocs (40) à l'entonnoir (10) placé sur un anneau (22), et déplaçant celui-ci, de sorte que l'anneau (22) peut dégager les ouvertures (23) prévues dans l'élément de tête (26) du tube extérieur et que le gaz comprimé qui se trouve dans l'agencement télescopique (7) et qui n'est plus nécessaire peut s'échapper par l'entonnoir (10).

**10.** Dispositif de décollage et d'accélération pour aéronefs et véhicules selon la revendication 7, caractérisé en ce que

- les moyens pour ramener en position rentrée les tubes (5, 6) déployés de manière télescopique sont construits de la manière suivante :

- tous les tubes (4, 5), sauf le tube intérieur, présentent sur leur circonférence au moins une rangée de trous (28, 29) qui sont disposés de manière à se trouver, dans la position déployée de l'agencement télescopique (7), entre la bague de guidage extérieure (19) du plus grand tube et la bague de guidage intérieure (18) du plus petit des tubes (4, 5, 6),

- le tube extérieur (4) présente sur sa circonférence au moins une autre rangée de trous (30) qui est située en dehors de l'écartement des anneaux de guidage (18, 19) et plus près de l'élément de tête (26) du tube extérieur (4) et qui est couverte par une bande élastomère (31), ces trous fonctionnant ainsi comme des clapets antiretour,

- il est prévu une chambre de pression (11) qui entoure le tube extérieur (4) sur une partie de sa longueur, qui couvre la ou les premières rangées de trous (29) et la seconde rangée de trous (30) et qui comporte une soupape de décharge (32),

- lors du déploiement de l'agencement télescopique (7), l'anneau de guidage intérieur (18), pourvu d'un joint d'étanchéité (17), du tube central (5) dégage la seconde rangée de trous (30) après avoir franchi celle-ci, moyennant quoi une partie du gaz comprimé peut entrer dans la chambre de pression (11), d'où il sort, après la décharge par les ouvertures (23), pour entrer dans l'espace annulaire (25) défini entre les tubes extérieur et central, (4, 5), et pour ramener le tube central dans le tube extérieur (4) sous l'action de la force apparaissant sur la surface de section transversale de l'espace annulaire (25), étant précisé que dès que l'anneau de guidage intérieur (18), pourvu d'un joint d'étanchéité (17), du tube intérieur (6) vient se placer à l'intérieur de l'anneau de guidage extérieur (19), pourvu d'un joint d'étanchéité (17), du tube extérieur (4), il se forme aussi dans l'espace annulaire (20) entre le tube central et le tube intérieur (6) une force de repoussement qui ramène le tube intérieur (6) dans le tube central (5).

**11.** Dispositif de décollage et d'accélération pour aéronefs et véhicules selon l'une des revendications 1 à 10, caractérisé en ce qu'il est stationnaire, le châssis (3), avec son axe horizontal (8), est monté pour pouvoir pivoter dans un élément d'installation stationnaire et le fond (12) du tube intérieur (6) peut pousser l'objet à accélérer.

**12.** Dispositif de décollage et d'accélération pour aéronefs et véhicules selon l'une des revendications 1 à 10, caractérisé en ce qu'il est monté dans un objet mobile.

**13.** Dispositif de décollage et d'accélération pour aéronefs et véhicules selon la revendication 12, caractérisé en ce que l'objet mobile est un aéronef, le châssis (3), avec son axe horizontal (8), est monté pivotant dans un élément d'installation solidaire de l'aéronef, sensiblement au niveau du centre de gravité de l'aéronef, et le fond (12) du tube intérieur (6) peut agir à l'encontre d'un point de repoussement stationnaire.

**14.** Dispositif de décollage et d'accélération pour aéronefs et véhicules selon l'une des revendications 1 à 13, caractérisé en ce que

- l'élément de tête (33) du tube intérieur (6) porte une barre de blocage (50) parallèle à son axe, qui traverse avec du jeu aussi bien l'élément de tête (34) du tube central que l'élément de tête (26) du tube extérieur (4),

- l'élément de tête (26) du tube extérieur (4) porte une partie rapportée (53) qui est reliée hermétiquement et de manière résistante à la pression audit élément de tête et dans laquelle une vis de blocage (55) est introduite latéralement et hermétiquement, laquelle vis (55) comporte à sa pointe une bille (56) contrainte par ressort,

- la barre de blocage (50) est suffisamment longue pour pénétrer dans la partie rapportée (53), quand l'agencement télescopique (7) est complètement rentré, de telle sorte que la bille (56) puisse s'enclencher dans une rainure annulaire (54) prévue sur ladite barre de blocage (50).

**15.** Dispositif de décollage et d'accélération pour aéronefs et véhicules selon la revendication 14, caractérisé en ce que la partie rapportée (53) porte un capteur électromagnétique (57) qui réagit aussi bien à la présence qu'au déplacement de la barre de blocage (50).

Fig. 4

Fig. 1

EP 0 983 195 B1

Fig. 3

Fig. 2

**Fig. 5**